# EUROPEAN PATENT SPECIFICATION

(11) **EP 2 741 018 B1**
(45) Date of publication and mention of the grant of the patent: **20.02.2019**
(21) Application number: 13194785.5
(22) Date of filing: 28.11.2013
(51) Int. Cl.: F24F 3/14, F25B 13/00, F25B 29/00, F24F 3/147, F24F 5/00, F24F 3/044

(54) **Treatment unit of the incoming air to a room**
Behandlungseinheit der in einen Raum strömenden Luft
Unité de traitement de l'air entrant dans une pièce

(30) Priority: 06.12.2012 IT MI20122084
(43) Date of publication of application: 11.06.2014
(73) Proprietor: Mitsubishi Electric Hydronics & IT Cooling Systems S.p.A., 31100 Treviso (IT)
(72) Inventor: Sormani, Giancarlo, 35128 Padova (IT); Pontarollo, Michele, 36061 Bassano Del Grappa (Vicenza) (IT); Fadiga', Francesco, 32020 Rivamonte Agordino (Belluno) (IT); Tosca, Carlo, 32020 Canale D'Agordo (Belluno) (IT); Passuello, Elvis, 36064 Mason Vicentino (Vicenza) (IT)
(74) Representative: Rapisardi, Mariacristina

(56) References cited:
- JP-A- 2002 061 894
- US-A- 4 887 438
- US-A- 6 141 979
- US-A1- 2003 121 271
- US-B1- 6 205 797
- US-B1- 6 311 511

## Description

The present invention relates to a direct expansion unit with a reversible summer/winter cycle for the treatment of incoming air to a served room.

In particular reference is made to a high efficiency and precision unit designed for treating the temperature and humidity of the air.

There are single-block air conditioners on the market that have an aeraulic circuit linked with a cooling circuit with a reversible summer/winter direct expansion operating cycle.

In some known types of air conditioners the dehumidification process provides a first cooling of the air and its subsequent heating in order to achieve the desired temperature to be input into the room.

This type of dehumidification process requires the expenditure of cooling power since the air must be cooled to a temperature lower than the desired one to be input into the room.

Some known types of air conditioners for the dehumidification of the air are equipped with a desiccant rotor impregnated with a dehydrating and adsorbent material, and provide for the regeneration of the dehydrating and adsorbent material of the dessicant rotor an exposure process thereof to an external heat source, for example a gas burner, which on the one hand can complicate the construction of the air conditioners and on the other hand can reduce their performance levels and in particular their energy output.

US 6 205 797 B1 discloses an air treatment unit according to the preamble of claim 1.

The technical task set by the present invention is therefore to provide a reversible summer/winter direct expansion unit for the treatment of the incoming air to a room of the type described above, of the type comprising for the dehumidification of the air a desiccant rotor impregnated with a dehydrating and adsorbent material, which allows the technical drawbacks complained of in the known art to be eliminated.

Within the scope of this technical task, an object of the invention is to provide a reversible summer/winter direct expansion unit of the type described above having high efficiency and precision operating continuity and a high energy output.

The technical task, as well as this and other objects, according to the present invention are reached by providing an incoming air treatment unit for a room, comprising an aeraulic circuit linked with at least a first cooling circuit with reversible summer/winter direct expansion operating cycle, said aeraulic circuit comprising at least one desiccant rotor impregnated with a dehydrating and adsorbent material, and at least one rotary enthalpy recuperator controlled by a speed regulator, and said at least one first cooling circuit comprising at least one compressor controlled by a speed regulator, characterised in that it provides a first heat exchanger between said supply channel and at least said first cooling circuit, a second heat exchanger between said supply channel and at least said first cooling circuit, at least a third heat exchanger between the return channel and at least said first cooling circuit, said first exchanger being activatable so as to operate as a condenser for said first cooling circuit and to heat the flow of air circulating in the supply channel in the summer operating cycle, said second exchanger being activatable so as to operate as an evaporator for said first cooling circuit to cool down to the desired temperature the flow of air circulating in the supply channel in the summer operating cycle, said desiccant rotor being arranged and configured so as to interact in the summer operating cycle with the flow of air heated by the first heat exchanger to regenerate said dehydrating and adsorbent material, and with the flow of air cooled by the second heat exchanger to dehumidify it, and said third heat exchanger being arranged to operate as a condenser for said first cooling circuit in the summer operating cycle.

The air treatment unit in compliance with the invention allows the supplied air to be renewed and treated with extreme precision and operating continuity so as to maintain the temperature and humidity of the supply air constant over time at the desired values. This treatment unit is independent and can be used in air-air systems or also in mixed air-water systems. In particular its capacity to be able to work independently and continuously enables it to be used as an independent system for the management of the air integrated within multipurpose air-air or air-water systems.

The provision of the desiccant rotor enables the air to be dehumidified without wasting power for the unit since the condensing power of the first cooling circuit can be exploited for that purpose: It is no longer necessary to perform the traditional dehumidification process with the initial cooling and subsequent heating. Therefore for the same dispensed power, higher sensitive power and total power ratios can be achieved, and higher dew points can be achieved, while the first cooling circuit can work with a higher evaporation temperature and therefore under more efficient conditions.

The provision of a speed regulator for the compressor of the first cooling circuit enables the external air load trend to be followed precisely and the requested power to be provided exactly in order to keep the supply air temperature at the desired value.

The rotary heat recuperator enables enthalpic heat contained in the return air to be recovered and advantageously has an adjustable rotation speed for the optimisation of its intake and for eliminating the minimum power step of the variable speed compressor.

Advantageously the supply fan also has an adjustable speed which can be adapted to the characteristics of the system in which the treatment unit is used also during the operation of the treatment unit.

Due to the synergic effect deriving from the combined regulation of the rotation speed of the variable speed compressor, the variable speed rotary heat recuperator and potentially also the supply fan which is also preferably provided with a variable speed, the treatment unit guarantees the stability of the supply air temperature and humidity at the desired values.

Further characteristics of the present invention are also defined in the following claims.

Further characteristics and advantages of the invention will more fully emerge from the description of a preferred but not exclusive embodiment of the air treatment unit according to the invention, illustrated by way of non-limiting example in the accompanying drawings, in which:

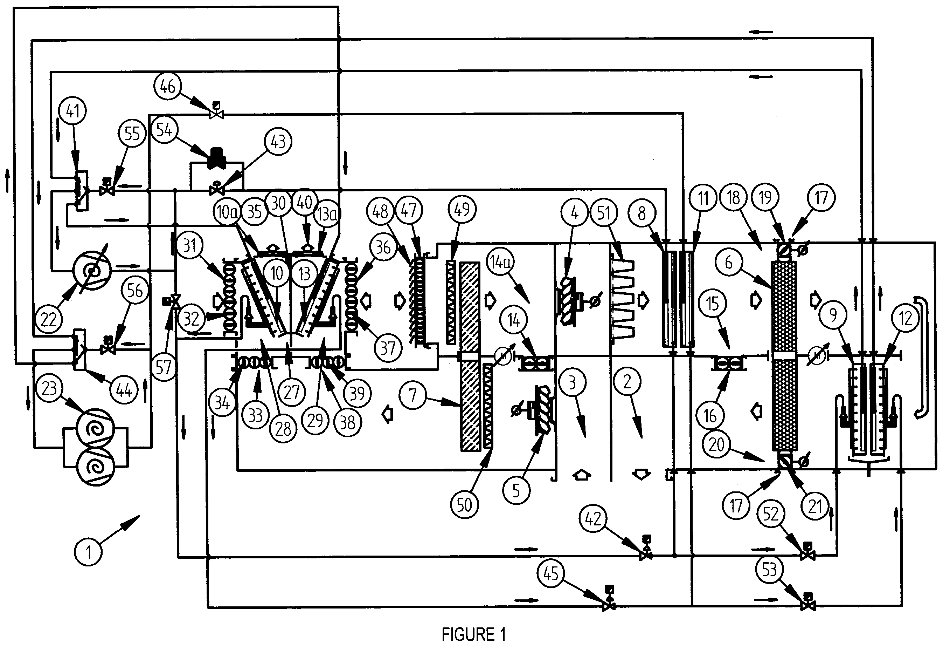

Figure 1 shows the diagram of the treatment unit in a possible summer operating cycle, with directional arrows along the circuit followed by the coolant in each cooling circuit and directional arrows along the circuit followed by the air in the aeraulic circuit;

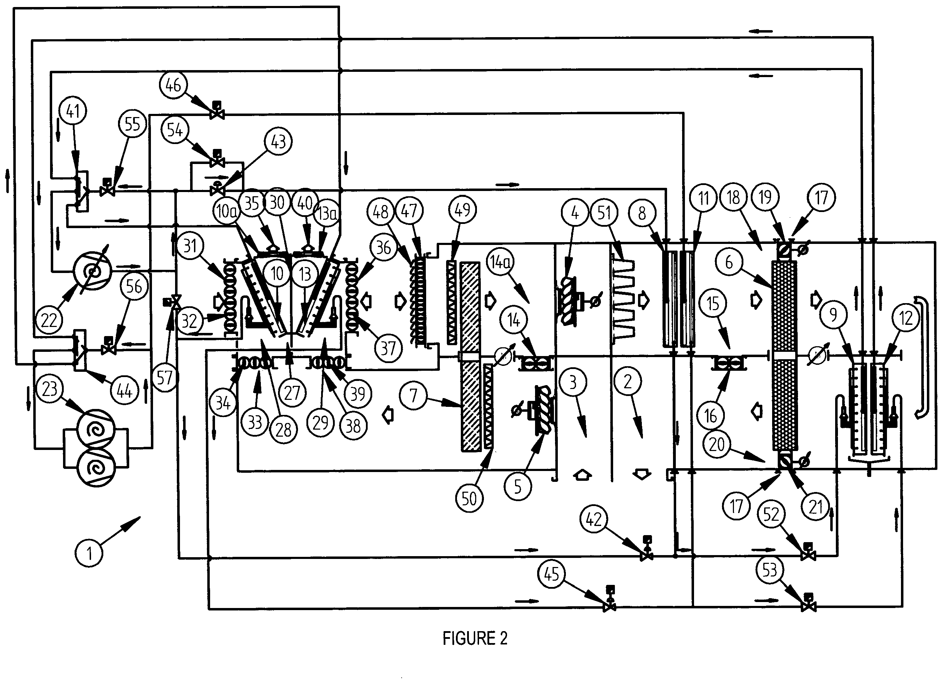

Figure 2 shows the diagram of the treatment unit in a possible summer operating cycle when the regeneration process of the desiccant rotor is activated, with directional arrows along the circuit followed by the coolant in each cooling circuit and directional arrows along the circuit followed by the air in the aeraulic circuit;

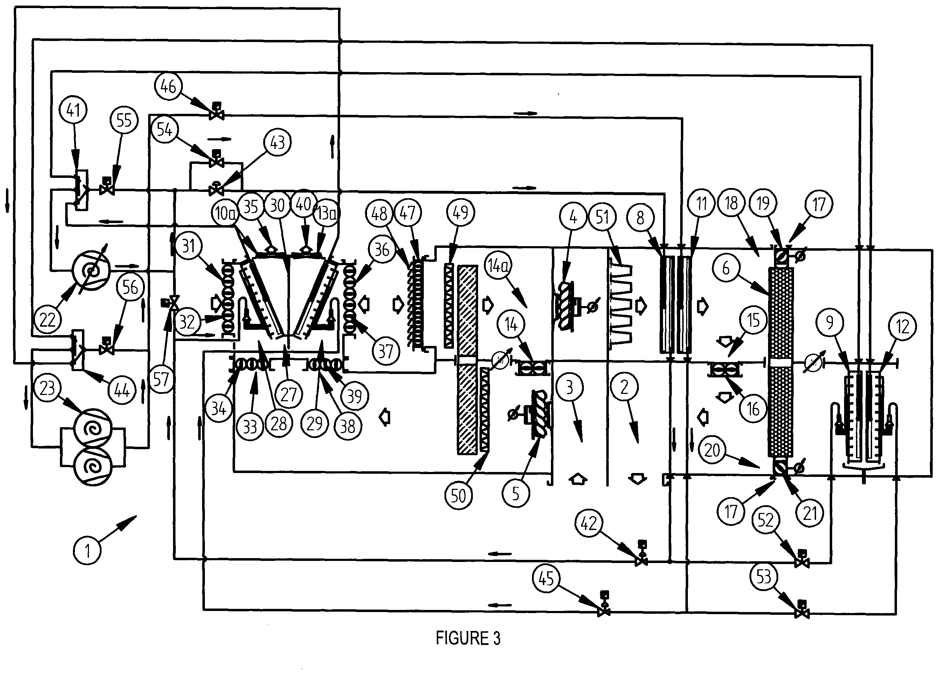

Figure 3 shows the diagram of the treatment unit in a possible winter operating cycle, with directional arrows along the circuit followed by the coolant in each cooling circuit and directional arrows along the circuit followed by the air in the aeraulic circuit;

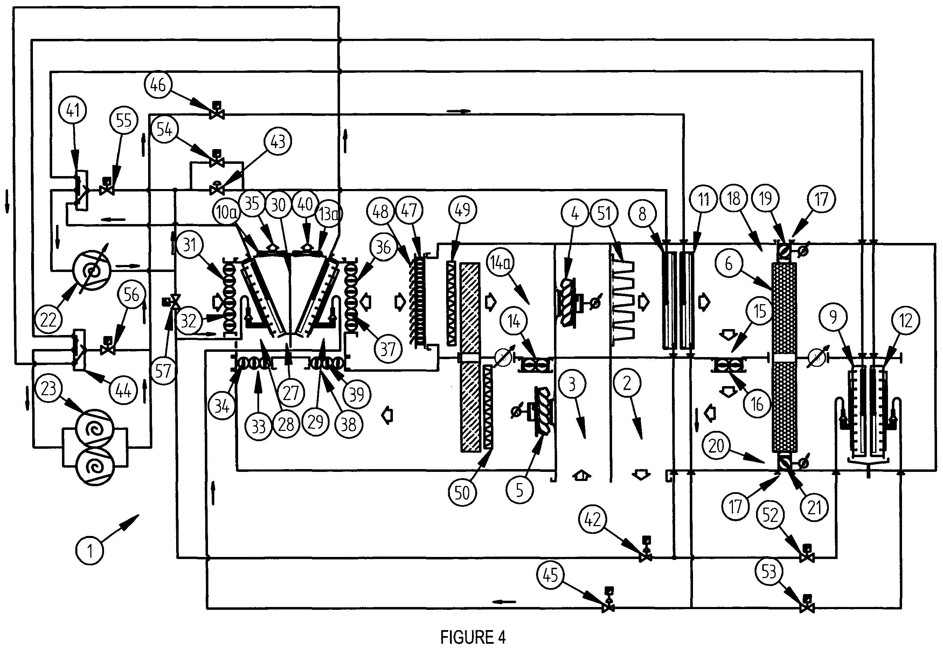

Figure 4 shows the diagram of the treatment unit in a possible hot gas defrost cycle, with directional arrows along the circuit followed by the coolant in each cooling circuit and directional arrows along the circuit followed by the air in the aeraulic circuit;
Figure 5 shows a psychometric diagram with the different transformations to which a supply air flow is subject with respect to the case of a traditional treatment process with dehumidification obtained from initial cooling and subsequent heating.

With reference to the mentioned figures, an incoming air treatment unit in a room is shown, indicated overall with the reference number 1.

The treatment unit 1 comprises an aeraulic circuit linked with at least one first cooling circuit with a reversible summer/winter direct expansion operating cycle. The treatment unit 1 has a single-block construction that provides a casing inside which all the components that are part of the cooling circuits provided and the aeraulic circuit are integrated.

Preferably but not necessarily the aeraulic circuit is also linked with at least a second cooling circuit with a reversible summer/winter direct expansion operating cycle, separate from the first cooling circuit.

The aeraulic circuit comprises an air supply channel 2 into the room, an air return channel 3 from the room, at least one supply fan 4 provided along the supply channel 2 for the generation of an air flow, preferably a return fan 5 provided along the return channel 3, at least one desiccant rotor 6 impregnated with a dehydrating and adsorbent material, and a rotary enthalpy recuperator 7 acting as a heat exchanger between the supply channel 2 and the return channel 3. Advantageously the rotary heat recuperator 7 is controlled by a speed regulator, for example, an inverter.

The rotary recuperator 7 has the task of exchanging sensitive and latent heat between the supply air and the return air.

Advantageously at least the supply fan 4 is also controlled by a speed regulator, and in particular the return fan 5 is also controlled by a speed regulator.

In particular the fans 4 and 5 are plug fans with an asynchronous motor controlled by an inverter.

The supply fan 4 and the return fan 5, which has the task of directly taking the air from the served room and expelling it, are electronically controlled in terms of flow rate and therefore process the same volume of air per hour with the result that the served room is pneumatically neutral.

The desiccant rotor 6 is preferably constructed with flat and corrugated sheets whose surface is coated with a layer of silica gel whose ability to withhold and release humidity varies as the temperature of the air flow that hits it varies.

The desiccant rotor 6 intercepts the supply channel 2 in correspondence with a first point and in correspondence with a second point downstream of the first point with respect to the supply air flow.

A first heat exchanger 8 is provided between the supply channel 2 of the aeraulic circuit and the first cooling circuit, a second heat exchanger 9 is provided between the supply channel 2 of the aeraulic circuit and the first cooling circuit, and a third heat exchanger 10 is provided between an end compartment 27 of the return channel 3 of the aeraulic circuit and the first cooling circuit.

Likewise a fourth heat exchanger 11 is provided between the supply channel 2 of the aeraulic circuit and the second cooling circuit, a fifth heat exchanger 12 is provided between the supply channel 2 of the aeraulic circuit and the second cooling circuit, and a sixth heat exchanger 13 is provided between the end compartment 27 of the return channel 3 of the aeraulic circuit and the second cooling circuit.

Preferably the fourth heat exchanger 11 and the first heat exchanger 8 comprise mutually engaged finned batteries, just as the fifth heat exchanger 12 and the second heat exchanger 9 comprise mutually engaged finned batteries.

The third heat exchanger 10 and the sixth heat exchanger 13 each comprise a finned battery to which one or more axial fans 10a, 13a are connected.

In particular the compartment 27 is split into two adjacent independent sub-compartments 28,29 through a dividing wall 30.

The sub-compartment 28, where the finned pack 10 and the axial fan 10a are positioned, has a first access route 31 equipped with first gate valve means 32 for sucking the air from the external environment, a second access route 33 equipped with gate valve means 34 for accessing the air flow from the return channel 3, and an exit route 35 for the return air flow.

The sub-compartment 29, where the finned pack 13 and the axial fan 13a are positioned, has a first access route 36 equipped with first gate valve means 37 for sucking the air from the external environment, a second access route 38 equipped with gate valve means 39 for accessing the air flow from the return channel 3, and an exit route 40 for the return air flow.

The aeraulic circuit preferably comprises, between a supply channel 2 downstream of the heat recuperator 7 with respect to the supply air flow and a point of the return channel 3 upstream of the heat recuperator 7 with respect to the return air flow, a connection channel 14a equipped with valve means, for example gate valve means 14 for bypassing the heat recuperator 7.

The aeraulic circuit preferably also comprises a derivation 15 of the supply channel 2 in a point of the supply channel 2 upstream of the first point in which the desiccant rotor 6 intercepts the supply air flow, equipped with valve means 16, for example gate valve means, for bypassing the dessicant rotor 6.

The aeraulic circuit further comprises splitting means 17 of the supply air flow rate crossing the desiccant rotor 6.

The splitting means 17 comprise a derivation 18 of the supply channel 2 equipped with valve means 19. Such a derivation 18 originates in a point of the supply channel 2 upstream of the first point in which the desiccant rotor 6 intercepts the supply air flow, and terminates in a point of the supply channel 2 downstream of the first point in which the desiccant rotor 6 intercepts the supply air flow but upstream of the set formed by the second heat exchanger 9 and the fifth heat exchanger 12.

The splitting means 17 further comprise a derivation 20 of the supply channel 2 equipped with valve means 21. Such a derivation 20 originates in a point of the supply channel 2 upstream of the second point in which the desiccant rotor 6 intercepts the supply air flow but downstream of the set formed by the second heat exchanger 9 and the fifth heat exchanger 12, and terminates in a point of the supply channel 2 downstream of the second point in which the desiccant rotor 6 intercepts the supply air flow.

Along the supply channel 2 there is a succession in cascade of the heat recuperator 7, the supply fan 4, the set formed by the first heat exchanger 8 and the fourth heat exchanger 11, a first angular sector of the desiccant rotor 6, the set formed by the second heat exchanger 9 and the fifth heat exchanger 12, and a second angular sector of the desiccant rotor 6 diametrically opposite the first angular sector.

The aeraulic circuit is completed by a terminal 47 for the incoming air to be treated in the supply channel 2, equipped with special rainproof grille 48, pleated filters 49, 50 for the incoming air to the rotary recuperator 7, and high efficiency filters 51.

Advantageously the first cooling circuit further to the first heat exchanger 8, the second heat exchanger 9 and the third heat exchanger 10, comprises at least one compressor 22 controlled by a speed regulator, for example, an inverter, a four-way valve 41 for inverting the cycle, an expansion valve 42, valve means 52,53,54,55,56,57 and modulating valve means 43 of the supply of the second heat exchanger 8.

Advantageously the second cooling circuit further comprises as well as the fourth heat exchanger 11, the fifth heat exchanger 12 and the sixth heat exchanger 13, at least one fixed speed compressor 23, a four-way valve 44 for inverting the cycle, an expansion valve 45, and valve means 46 for modulating the supply to the fourth heat exchanger 11.

From a functional point of view, in the summer operating cycle of the unit 1, when the first cooling circuit is active, the first exchanger 8 can act as a condenser for the first cooling circuit for heating the air flow circulating in the supply channel 2 when the regeneration of the desiccant rotor 6 is requested, the second heat exchanger 9 acts as an evaporator for the first cooling circuit for cooling (alone or potentially in combination with the evaporator of the second cooling circuit) the air flow circulating in the supply channel 2 to the desired temperature, the desiccant rotor 6 interacts with the air flow heated by the first heat exchanger 8 when the regeneration process is active, and with the air flow cooled by the second heat exchanger 9 to dehumidify it, while the third heat exchanger 10 acts as a condenser for the first cooling circuit.

Furthermore, in the summer operating cycle of the unit 1, when the second cooling circuit is active, the fourth exchanger 11 can act as a condenser for the second cooling circuit for heating the air flow circulating in the supply channel 2 when the regeneration of the desiccant rotor 6 is requested, the fifth heat exchanger 12 acts as an evaporator for the second cooling circuit for cooling the air flow circulating in the supply channel 2 to the desired temperature (alone or potentially in combination with the evaporator of the first cooling circuit), the desiccant rotor 6 interacts with the air flow heated by the fourth heat exchanger 11 to regenerate the dehydrating and adsorbent material when the regeneration process is active, and with the air flow cooled by the fifth heat exchanger 12 to dehumidify it, while the sixth heat exchanger 13 acts as a condenser for the second cooling circuit.

In the summer operating cycle the incoming air to the batteries 10 and/or 13 is made up of a mixture of the external air that enters from the gates 32 and/or 37, and the return air arriving from the gates 34 and/or 39. The axial fans 10a, 13a have a variable speed and their air flow rate is a function of the condensation pressure.

The return air flow rate transiting from the gates 32 and/or 37 is constant since the flow rate of the supply air flow is constant.

It follows that, in the summer, the incoming mixture to the batteries 10 and/or 13 is comprised of an air flow with a variable air flow rate and temperature.

In the summer operating cycle to bring the supplied air flow to the desired temperature and humidity conditions the energy content of the return air flow is also used by activating the rotary heat recuperator 7 and at least a part of the condensing power of the second heat exchanger 8 of the first cooling circuit and/or the fourth heat exchanger 11 of the second cooling circuit is used, if provided, for the regeneration of the desiccant rotor 6. The temperature is controlled thanks to the variable speed compressor 22 and the supply and return fans 4 and 5, which guarantee the required supply and return air flow rates from the room necessary to guarantee the enthalpy jump required on the rotary recuperator 7 whose speed is regulated in turn in order to appropriately regulate in combination with the variable speed compressor 22 the enthalpy content to be transferred to the treatment air.

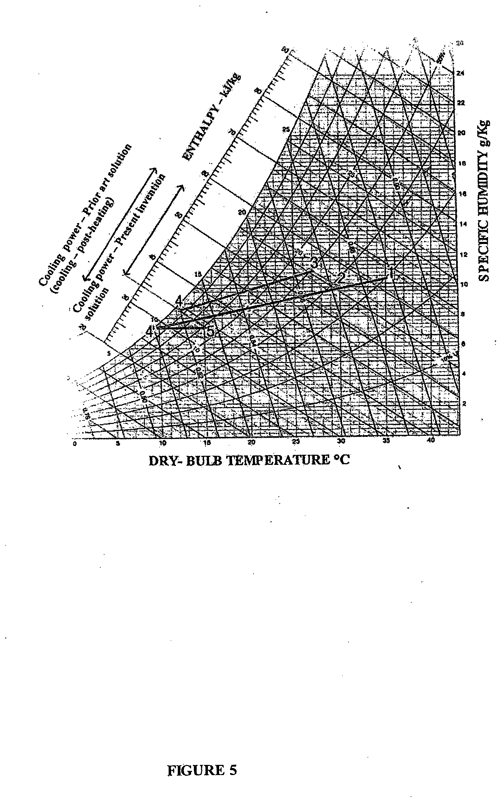

As seen in the psychrometric diagram in Figure 5 the supply air is subject to the following transformations: 1-2 through the heat recuperator 7; 2-3 through the regenerating section of the desiccant rotor 6; 3-4 through the second heat exchanger 9; and 4-5 through the process section of the desiccant rotor 6.

Consequently the air to be treated saves the enthalpy jump due to cooling (transformation 2-4') and subsequent post-heating (transformation 4'-5) which occur in a traditional air treatment process.

As mentioned, the dehumidification of the air to be treated is performed through the desiccant rotor 6. This actuates an air drying process using a consistent amount of silica gel deposited on a drum comprising a light, heat-insulating material in order to transfer only the latent heat part. To optimise the energy consumption of the supply fan 4 the flow rate of the supply air flow regulated which crosses the desiccant rotor 6 according to the specific humidity contained in the supply air before interaction with the desiccant rotor 6 itself. If the specific humidity of the air to be treated is already at a lower value than the maximum provided, the gate valve means 19 and 21 open completely to by-pass the desiccant rotor 6, and if the specific humidity in the air to be treated is very high, the gate valve means 19 and 21 shut completely in order to have the maximum dehumidification effect possible by the desiccant rotor 6. According to the specific humidity of the air to be treated, measured by an appropriate humidity probe, it is possible to regulate the opening of the gate means 19 and 21.

When in the summer operating cycle the gate valve means 19 and 21 are completely closed, if the desiccant rotor 6 is not able to absorb humidity, it is necessary to implement its regeneration which preferably but not necessarily happens through the first cooling circuit alone. The regeneration takes place as seen through heating by the first heat exchanger 8 which operates with part of the hot gas from the compressor 22. In particular the modulating valve means 43 may be adjusted at the opening in order to supply the first heat exchanger 8 with the coolant gas, with the purpose of drying the desiccant rotor 6 by the amount necessary to reduce the water content in the air.

In the winter operating cycle to bring the supplied air flow to the desired temperature and humidity conditions it is generally sufficient to activate only the first cooling circuit. This is regulated in cascade with priority given to the rotation speed of the rotary recuperator 7 and then to the speed of the variable speed compressor 22, and the desiccant rotor 6 is excluded from the path of the supply air flow. In particular the combination of the two speed regulations of the compressor 22 and the rotary recuperator 7 enables the speed of the compressor 22 to be reduced and the speed of the recuperator 7 to be increased in the event that the return air enables the required supply conditions to be reached, or if necessary, enables the speed of the compressor 22 to be increased in order to guarantee sufficient condensing power and at the same time reduce the speed of the rotary recuperator 7 in order to cool down the treated air.

In the winter operating cycle the first heat exchanger 8 and the fourth heat exchanger 11 act as condensers, whereas the third heat exchanger 10 and the sixth heat exchanger 13 act as evaporators.

In the winter operating cycle, when both the first and the second cooling circuits are provided, it is possible to perform defrost cycles on the evaporators while maintaining the desired temperature and humidity conditions for the supply air. For example, while a hot gas defrost cycle is performed on the third heat exchanger 10 of the first cooling circuit to maintain the desired temperature and humidity conditions the second cooling circuit is activated. The ventilated compartment 27 served by the axial fans 10a, 13a is split into two sub-compartments 28, 29 separated so that the defrost cycles can be performed independently hence guaranteeing the operation of the second cooling circuit in heat pump mode. Naturally, both in the summer operating cycle and in the winter operating cycle, the treatment unit 1 can operate on full load, that is, with just one of the two cooling circuits active, or in partial load mode, with just one of the two cooling circuits active.

In the full load operating mode of the treatment unit 1, the return air transits through the gates 34 and 39 and is conveyed into the top of the finned batteries 10, 13 to then be expelled through the axial fans 10a, 13a.

In the partial load operating mode of the treatment unit 1, the return air is conveyed below the finned battery 10 to then be expelled through the axial fans 10a if the first cooling circuit is active, or is conveyed below the finned battery 13 to then be expelled through the axial fans 13a if the second cooling circuit is active.

In both partial and full load operating mode, if the by-pass valve means 16 are activated to open, the treatment unit 1 can operate in a complete supply air recirculation capacity in which the rotary recuperator 7 is by-passed.

In the winter operating cycle the treatment unit 1 only uses the return air for evaporation on the batteries 10 and/or 13. In fact the gates 32 and 37 are closed and the air that crosses the batteries 10 and/or 13 is only the return air that transits through the recuperator 7, whereas the axial fans 10a, 13a in this case have a minimum rotation speed so as to counterbalance the load loss of the batteries 10, 13 in order to equalise the internal pressure of the relative compartments 28, 29 to atmospheric pressure. In partial load operating mode, the axial fans 10a, 13a relative to the cooling circuit that is not working, are off.

The treatment unit 1 as conceived herein is susceptible to many modifications and variations, all falling within the scope of the invented concept as disclosed by the appended claims; furthermore, all the details are replaceable by technically equivalent elements.

The materials used, as well as the dimensions, may in practice be of any type according to requirements and the state of the art.

## Claims

1. Incoming air treatment unit (1) for a room, comprising an aeraulic circuit linked with at least a first cooling circuit with reversible summer/winter direct expansion operating cycle, said aeraulic circuit comprising at least one desiccant rotor (6) impregnated with a dehydrating and adsorbent material, comprising an air supply channel (2) into said room and an air return channel (3) from said room provided by the aeraulic circuit, and at least one rotary enthalpy recuperator (7) controlled by a speed regulator, and said at least one first cooling circuit comprising at least one compressor controlled by a speed regulator, **characterised in that** it provides a first heat exchanger (8) between said supply channel (2) and at least said first cooling circuit, a second heat exchanger (9) between said supply channel (2) and at least said first cooling circuit, at least a third heat exchanger (10) between the return channel (3) and at least said first cooling circuit, said first exchanger (8) being activatable so as to operate as a condenser for said first cooling circuit and to heat the flow of air circulating in the supply channel (2) in the summer operating cycle, said second exchanger (9) being activatable so as to operate as an evaporator for said first cooling circuit to cool down to the desired temperature the flow of air circulating in the supply channel (2) in the summer operating cycle, said desiccant rotor (6) being arranged and configured so as to interact in the summer operating cycle with the flow of air heated by the first heat exchanger (8) to regenerate said dehydrating and adsorbent material, and with the flow of air cooled by the second heat exchanger (9) to dehumidify it, and said third heat exchanger (10) being arranged to operate as a condenser for said first cooling circuit in the summer operating cycle.

2. Incoming air treatment unit (1) for a room according to the previous claim, **characterised in that** said enthalpy recuperator (7) is configured and arranged so as to act as a heat exchanger between the air supply channel (2) into said room and the air return channel (3) from said room provided by the aeraulic circuit.

3. Incoming air treatment unit (1) for a room according to the previous claim, **characterised in that** said aeraulic circuit comprises at least one supply fan (4) provided along the supply channel (2) for the generation of a flow of air, said supply fan (4) being controlled by a speed regulator.

4. Incoming air treatment unit (1) according to any of the previous claims, **characterised in that** said aeraulic circuit comprises splitting means (17) of the flow rate of the supply air flow that crosses said desiccant rotor (6).

5. Incoming air treatment unit (1) according to any of the previous claims, **characterised in that** said aeraulic circuit comprises, between one point in the supply channel (2) downstream of said rotary heat recuperator (7) with respect to the direction of the supply air flow and one point on the return channel (3) upstream of said rotary heat recuperator (7) with respect to the direction of the return air flow, a connection channel (13) equipped with by-pass valve means (14) of said rotary heat recuperator (7).

6. Incoming air treatment unit 1 according to any of the previous claims, **characterised in that** said aeraulic circuit comprises a derivation (15) of the supply channel (2) upstream of the desiccant rotor (6), equipped with valve means (16) for bypassing said desiccant rotor (6).

7. Incoming air treatment unit (1) according to any of the previous claims, **characterised in that** it comprises a second cooling circuit with reversible summer/winter direct expansion operating cycle separate from the first cooling circuit, a fourth heat exchanger (11) being provided between said second cooling circuit and said supply channel (2), a fifth heat exchanger (12) being provided between said second cooling circuit and said supply channel (2), and a sixth heat exchanger (13) being provided between said second cooling circuit and said return channel (3).

8. Incoming air treatment unit (1) according to the previous claim, **characterised in that** said first and fourth heat exchangers (8, 11) comprise mutually engaged finned batteries, and said second and fifth heat exchangers (9, 12) comprise mutually engaged finned batteries.

9. Incoming air treatment unit (1) according to claim 8 **characterised in that** said second circuit comprises at least one fixed speed compressor (23).

10. Incoming air treatment unit (1) according to any of the previous claims, **characterised in that** it has a single-block construction which provides a casing within which all the components are integrated.

11. Control method of an incoming air treatment unit (1) according to one or more of the previous claims, **characterised in that** to bring the supply air flow to the desired temperature and humidity conditions in the summer operating cycle the energy content of the return air flow is also used through the activation of said rotary heat recuperator (7) and at least part of the condensing power of at least the first heat exchanger (8) is used for the regeneration of said desiccant rotor (6).

12. Control method of an incoming air treatment unit (1) according to one or more of the previous claims, **characterised in that** to bring the supply air flow to the desired temperature and humidity conditions in the winter operating cycle the speed of the variable speed compressor (22) and the rotation speed of the rotary heat recuperator (7) are correlated, and the desiccant rotor is excluded from the path of the supply air flow.

13. Control method of an incoming air treatment unit according to one or more of the previous claims, **characterised in that** in a winter cooling cycle in which the first cooling circuit is active and the second cooling circuit is inactive, the second cooling circuit is activated for the necessary time to perform a hot gas defrost cycle of said third heat exchanger (10) of the first cooling circuit so as to maintain the desired temperature and humidity conditions.

## Patentansprüche

1. Behandlungseinheit der einströmenden Luft (1) für einen Raum, umfassend einen Lüftungsskreislauf, der mit mindestens einem ersten Kühlkreislauf mit reversiblem Sommer/Winter-Direktausdehnungsbetriebszyklus verbunden ist, wobei der Lüftungsskreislauf mindestens einen Trockenmittelrotor (6) umfasst, der mit einem dehydrierenden und adsorbierenden Material imprägniert ist, umfassend einen Luftzufuhrkanal (2) in den Raum und einen Luftrückführkanal (3) aus dem Raum, der vom Lüftungsskreislauf bereitsgestellt wird, und mindestens einen rotierenden Enthalpierekuperator (7), der durch einen Drehzahlregler gesteuert wird, und wobei der mindestens eine erste Kühlkreislauf mindestens einen Kompressor umfasst, der durch einen Drehzahlregler gesteuert wird, **dadurch gekennzeichnet, dass** sie einen ersten Wärmetauscher (8) zwischen dem Zufuhrkanal (2) und mindestens dem ersten Kühlkreislauf, einen zweiten Wärmetauscher (9) zwischen dem Zufuhrkanal (2) und mindestens dem ersten Kühlkreislauf, mindestens einen dritten Wärmetauscher (10) zwischen dem Rückführkanal (3) und mindestens dem ersten Kühlkreislauf vorsieht, wobei der erste Tauscher (8) aktivierbar ist, um als Kondensator für den ersten Kühlkreislauf zu arbeiten und den Luftstrom, der im Zufuhrkanal (2) im Sommerbetriebszyklus zirkuliert, zu erwärmen, wobei der zweite Tauscher (9) aktivierbar ist, um als Verdampfer für den ersten Kühlkreislauf zu arbeiten, um den Luftstrom, der im Zufuhrkanal (2) im Sommerbetriebszyklus zirkuliert, auf die gewünschte Temperatur abzukühlen, wobei der Trockenmittelrotor (6) angeordnet und so konfiguriert ist, dass er im Sommerbetriebszyklus mit dem vom ersten Wärmetauscher (8) erwärmten Luftstrom wechselwirkt, um das dehydrierenden und adsorbierende Material zu regenerieren, und mit dem Luftstrom, der durch den zweiten Wärmetauscher (9) gekühlt wird, um es zu entfeuchten, und wobei der dritte Wärmetauscher (10) so angeordnet ist, dass er als Kondensator für den ersten Kühlkreislauf im Sommerbetriebszyklus arbeitet.

2. Behandlungseinheit der einströmenden Luft (1) für einen Raum nach dem vorherigen Anspruch, **dadurch gekennzeichnet, dass** der Enthalpierekuperator (7) konfiguriert und angeordnet ist, um als Wärmetauscher zwischen dem Luftzufuhrkanal (2) in den Raum und dem Rückführkanal (3) aus dem Raum zu wirken, der vom Lüftungsskreislauf bereitgestellt wird.

3. Behandlungseinheit der einströmenden Luft (1) für einen Raum nach dem vorhergehenden Anspruch, **dadurch gekennzeichnet, dass** der Lüftungsskreislauf mindestens einen Zufuhrventilator (4) umfasst, der entlang des Zufuhrkanals (2) zur Erzeugung eines Luftstroms vorgesehen ist, wobei der Zufuhrventilator (4) durch einen Drehzahlregler gesteuert wird.

4. Behandlungseinheit der einströmenden Luft (1) nach einem der vorhergehenden Ansprüche, **dadurch gekennzeichnet, dass** der Lüftungsskreislauf Teilungsmittel (17) des Durchflusses des Zufuhrluftstroms umfasst, der den Trockenmittelrotor (6) kreuzt.

5. Behandlungseinheit der einströmenden Luft (1) nach einem der vorhergehenden Ansprüche, **dadurch gekennzeichnet, dass** der Lüftungsskreislauf zwischen einem Punkt im Zufuhrkanal (2) stromabwärts des rotierenden Wärmerekuperators (7) in Bezug auf die Richtung des Zufuhrluftstroms und einem Punkt im Rückführkanal (3) stromaufwärts des rotierenden Wärmerekuperators (7) in Bezug auf die Richtung des Rückluftstroms, einen Verbindungskanal (13) umfasst, der mit Bypass-Ventilmitteln (14) des rotierenden Wärmerekuperators (7) ausgestattet ist.

6. Behandlungseinheit der einströmenden Luft (1) nach einem der vorhergehenden Ansprüche, **dadurch gekennzeichnet, dass** der Lüftungsskreislauf eine Ableitung (15) des Zufuhrkanals (2) stromaufwärts des Trockenmittelrotors (6) umfasst, ausgestattet mit Ventilmitteln (16) zum Umgehen des Trockenmittelrotors (6).

7. Behandlungseinheit der einströmenden Luft (1) nach einem der vorhergehenden Ansprüche, **dadurch gekennzeichnet, dass** sie einen zweiten Kühlkreislauf mit reversiblem Sommer/Winter-Direktausdehnungsbetriebszyklus getrennt vom ersten Kühlkreislauf, einen vierten Wärmetauscher (11), der zwischen dem zweiten Kühlkreislauf und dem Zufuhrkanal (2) vorgesehen ist, einen fünften Wärmetauscher (12), der zwischen dem zweiten Kühlkreislauf und dem Zufuhrkanal (2) vorgesehen ist und einen sechsten Wärmetauscher (13), der zwischen dem zweiten Kühlkreislauf und dem Rückführkanal (3) vorgesehen ist, umfasst.

8. Behandlungseinheit der einströmenden Luft (1) nach dem vorhergehenden Anspruch, **dadurch gekennzeichnet, dass** der erste und vierte Wärmetauscher (8, 11) ineinander eingegriffene Rippenbatterien umfassen und der zweite und fünfte Wärmetauscher (9, 12) ineinander eingegriffene Rippenbatterien umfassen.

9. Behandlungseinheit der einströmenden Luft (1) nach Anspruch, **dadurch gekennzeichnet, dass** der zweite Kreislauf mindestens einen Kompressor (23) mit fester Drehzahl umfasst.

10. Behandlungseinheit der einströmenden Luft (1) nach einem der vorhergehenden Ansprüche, **dadurch gekennzeichnet, dass** sie eine Einblockkonstruktion aufweist, die ein Gehäuse vorsieht, in dem alle Komponenten integriert sind.

11. Steuerverfahren einer Behandlungseinheit der einströmenden Luft (1) nach einem oder mehreren der vorhergehenden Ansprüche, **dadurch gekennzeichnet, dass** der Energiegehalt des Rückluftstroms auch durch die Aktivierung des rotierenden Wärmerekuperators (7) genutzt wird, um die Zufuhrluftstrom auf die gewünschten Temperatur- und Feuchtigkeitsbedingungen im Sommerbetriebszyklus zu bringen und mindestens ein Teil der Kondensationsleistung mindestens des ersten Wärmetauschers (8) für die Regeneration des Trockenmittelrotors (6) verwendet wird.

12. Steuerverfahren einer Behandlungseinheit der einströmenden Luft (1) nach einem oder mehreren der vorhergehenden Ansprüche, **dadurch gekennzeichnet, dass** die Drehzahl des drehzahlgeregelten Kompressors (22) und die Drehzahl des rotierenden Wärmerekuperators (7) korreliert werden, um die Zufuhrluftstrom auf die gewünschten Temperatur- und Feuchtigkeitsbedingungen im Winterbetriebszyklus zu bringen und der Trockenmittelrotor vom Weg des Zufuhrluftstroms ausgeschlossen wird.

13. Steuerverfahren einer Behandlungseinheit der einströmenden Luft nach einem oder mehreren der vorhergehenden Ansprüche, **dadurch gekennzeichnet, dass** in einem Winterkühlzyklus, in dem der erste Kühlkreislauf aktiv ist und der zweite Kühlkreislauf inaktiv ist, der zweite Kühlkreislauf für die erforderliche Zeit aktiviert wird, um einen Heißgasabtauzyklus des dritten Wärmetauschers (10) des ersten Kühlkreislaufs durchzuführen, um die gewünschten Temperatur- und Feuchtigkeitsbedingungen aufrechtzuerhalten.

## Revendications

1. Unité de traitement (1) de l'air entrant dans une pièce, comprenant un circuit aéraulique relié à au moins un premier circuit de refroidissement doté d'un cycle de fonctionnement à expansion directe et réversible été/hiver, ledit circuit aéraulique comprenant au moins un rotor déshydrateur (6) imprégné d'une matière absorbante et déshydratante, comprenant un canal d'amenée d'air (2) dans ladite pièce et un canal de retour d'air (3) de ladite pièce pourvu d'un circuit aéraulique, et au moins un récupérateur enthalpique rotatif (7) commandé par un régulateur de vitesse, et ledit au moins un premier circuit de refroidissement comprenant au moins un compresseur commandé par un régulateur de vitesse, **caractérisée en ce qu'**elle est pourvue d'un premier échangeur de chaleur (8) entre ledit canal d'amenée (2) et au moins ledit premier circuit de refroidissement, d'un second échangeur de chaleur (9) entre le dit canal d'amenée (2) et au moins ledit premier circuit de refroidissement, d'au moins un troisième échangeur de chaleur (10) entre le canal de retour (3) et au moins ledit premier circuit de refroidissement, ledit premier échangeur (8) pouvant être activé de manière à fonctionner comme un condensateur pour ledit premier circuit de refroidissement et pour chauffer le flux d'air circulant dans le canal d'amenée (2) dans le cycle de fonctionnement estival, ledit second échangeur (9) pouvant être activé de manière à fonctionner comme un évaporateur pour ledit premier circuit de refroidissement pour refroidir à la température désirée le flux d'air circulant dans le canal d'amenée (2) dans le cycle de fonctionnement estival, ledit rotor déshydratant (6) étant disposé et configuré de sorte à interagir dans le cycle de fonctionnement estival avec le flux d'air chauffé par le premier échangeur de chaleur (8) pour régénérer ladite matière déshydratante et absorbante, et avec le flux d'air refroidi par le second échangeur de chaleur (9) pour le déshumidifier, et ledit troisième échangeur de chaleur (10) étant disposé pour fonctionner comme un condensateur pour ledit premier circuit de refroidissement dans le cycle de fonctionnement estival.

2. Unité de traitement (1) de l'air entrant dans une pièce selon la revendication précédente, **caractérisée en ce que** ledit récupérateur enthalpique (7) est configuré et disposé de sorte à agir comme un échangeur de chaleur entre le canal d'amenée d'air (2) dans ladite pièce et le canal de retour d'air (3) de ladite pièce pourvu du circuit aéraulique.

3. Unité de traitement (1) de l'air entrant dans une pièce selon la revendication précédente, **caractérisée en ce que** ledit circuit aéraulique comprend au moins un ventilateur refoulant (4) prévu le long du canal d'amenée (2) pour la génération d'un flux d'air, ledit ventilateur refoulant (4) étant commandé par un régulateur de vitesse.

4. Unité de traitement (1) d'air entrant selon l'une quelconque des revendications précédentes, **caractérisée en ce que** ledit circuit aéraulique comprend des moyens de séparation (17) du débit du flux d'air pulsé traversant ledit rotor déshydratant (6) .

5. Unité de traitement (1) d'air entrant selon l'une quelconque des revendications précédentes, **caractérisée en ce que** ledit circuit aéraulique comprend, entre un point dans le canal d'amenée (2) en aval dudit récupérateur de chaleur rotatif (7) par rapport à la direction du flux d'air pulsé et un point sur le canal de retour (3) en amont dudit récupérateur de chaleur rotatif (7) par rapport à la direction du flux d'air de retour, un canal de raccordement (13) équipé de moyens à clapet de dérivation (14) dudit récupérateur de chaleur rotatif (7).

6. Unité de traitement (1) d'air entrant selon l'une quelconque des revendications précédentes, **caractérisée en ce que** ledit circuit aéraulique comprend une dérivation (15) du canal d'amenée (2) en amont du rotor déshydratant (6) équipée de moyens à clapet (16) pour contourner ledit rotor déshydratant (6).

7. Unité de traitement (1) d'air entrant selon l'une quelconque des revendications précédentes, **caractérisée en ce qu'**elle comprend un second circuit de refroidissement doté d'un cycle de fonctionnement à expansion directe et réversible été/hiver séparé du premier circuit de refroidissement, un quatrième échangeur de chaleur (11) étant prévu entre ledit second circuit de refroidissement et ledit canal d'amenée (2), un cinquième échangeur de chaleur (12) étant prévu entre ledit second circuit de refroidissement et ledit canal d'amenée (2), et un sixième échangeur de chaleur (13) étant prévu entre ledit second circuit de refroidissement et ledit canal de retour (3).

8. Unité de traitement (1) d'air entrant selon la revendication précédente, **caractérisée en ce que** lesdits premier et quatrième échangeurs de chaleur (8, 11) comprennent des batteries à ailettes mutuellement en prise, et lesdits second et cinquième échangeurs de chaleur (9, 12) comprennent des batteries à ailettes mutuellement en prise.

9. Unité de traitement (1) d'air entrant selon la revendication 8, **caractérisée en ce que** ledit second circuit comprend au moins un compresseur (23) à vitesse fixe.

10. Unité de traitement (1) d'air entrant selon l'une quelconque des revendications précédentes, **caractérisée en ce qu'**elle comporte une construction monobloc prévoyant une enveloppe à l'intérieur de laquelle sont intégrés tous les composants.

11. Procédé de commande d'une unité de traitement (1) d'air entrant selon une ou plusieurs des revendications précédentes, **caractérisé en ce que** pour amener le flux d'air pulsé aux conditions de température et d'humidité désirées dans le cycle de fonctionnement estival, le contenu énergétique du flux d'air de retour est aussi utilisé à travers l'activation dudit récupérateur de chaleur rotatif (7) et au moins une partie de la puissance de condensation de l'au moins un premier échangeur de chaleur (8) est utilisée pour la régénération dudit rotor déshydratant (6).

12. Procédé de commande d'une unité de traitement (1) d'air entrant selon une ou plusieurs des revendications précédentes, **caractérisé en ce que** pour amener le flux d'air pulsé aux conditions de température et d'humidité désirées dans le cycle de fonctionnement hivernal, la vitesse du compresseur (22) à vitesse variable et la vitesse de rotation du récupérateur de chaleur rotatif (7) sont corrélées, et le rotor déshydratant est exclu du parcours du flux d'air pulsé.

13. Procédé de commande d'une unité de traitement (1) d'air entrant selon une ou plusieurs des revendications précédentes, **caractérisé en ce que** dans un cycle de refroidissement hivernal dans lequel le premier circuit de refroidissement est actif et le second circuit de refroidissement est inactif, le second circuit de refroidissement est activé pendant la période de temps nécessaire pour effectuer un cycle de dégivrage par gaz chauds dudit troisième échangeur de chaleur (10) du premier circuit de refroidissement de sorte à maintenir les conditions de température et d'humidité désirées.
